(19) Europäisches Patentamt / European Patent Office / Office européen des brevets

(11) **EP 3 985 823 A1**

(12) **EUROPEAN PATENT APPLICATION**

(43) Date of publication:
**20.04.2022 Bulletin 2022/16**

(21) Application number: **20203160.5**

(22) Date of filing: **21.10.2020**

(51) International Patent Classification (IPC):
*H02J 1/10* (2006.01)    *H02M 3/335* (2006.01)

(52) Cooperative Patent Classification (CPC):
**H02J 1/102; H02M 3/33561**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2020 CN 202011108352**

(71) Applicant: **Hitachi Energy Switzerland AG
5400 Baden (CH)**

(72) Inventors:
• **STEIMER, Peter
5420 Ehrendingen (CH)**
• **YUAN, ChunMing
Beijing, Beijing 100062 (CN)**
• **TIMBUS, Adrian
5507 Mellingen (CH)**
• **MAIBACH, Philippe
5037 Muhen (CH)**
• **STEINKE, Juergen Kurt
79774 Albbruck (DE)**
• **ISLER, Stephane
74130 Faucigny (FR)**
• **BURKART, Ralph
8037 Zürich (CH)**

(74) Representative: **Vossius & Partner
Patentanwälte Rechtsanwälte mbB
Siebertstrasse 3
81675 München (DE)**

(54) **POWER GRID**

(57)    The present disclosure relates to a power grid comprising a converting stage comprising a plurality of DC/DC converters connected in parallel. At least one of the DC/DC converters is a single-stage isolated DC/DC converter comprising a voltage control configured to control a voltage of the respective DC/DC converter.

Fig. 5

EP 3 985 823 A1

**Description**

The present disclosure relates to a power grid. In particular, the present disclosure proposes a power distribution and collection grid or power redistribution grid based on parallel connected converters. Power distribution units for the individual loads allow efficient use of the infrastructure and increased availability. Overall energy management of the innovative power distribution and collection grid enable highest efficiency and control of the electrical energy costs.

The energy sources as well as the loads have changed in recent years, leading to different requirements of a power grid. Typical new loads and sources in the distribution grid are e.g. heat pumps, mainly alternating current (AC) connected, data centers and communication infrastructure, battery energy systems at the grid edge and electric vehicle DC chargers for electric vehicles, E-buses, E-trucks and E-trains and renewables like photovoltaic (PV) solar systems.

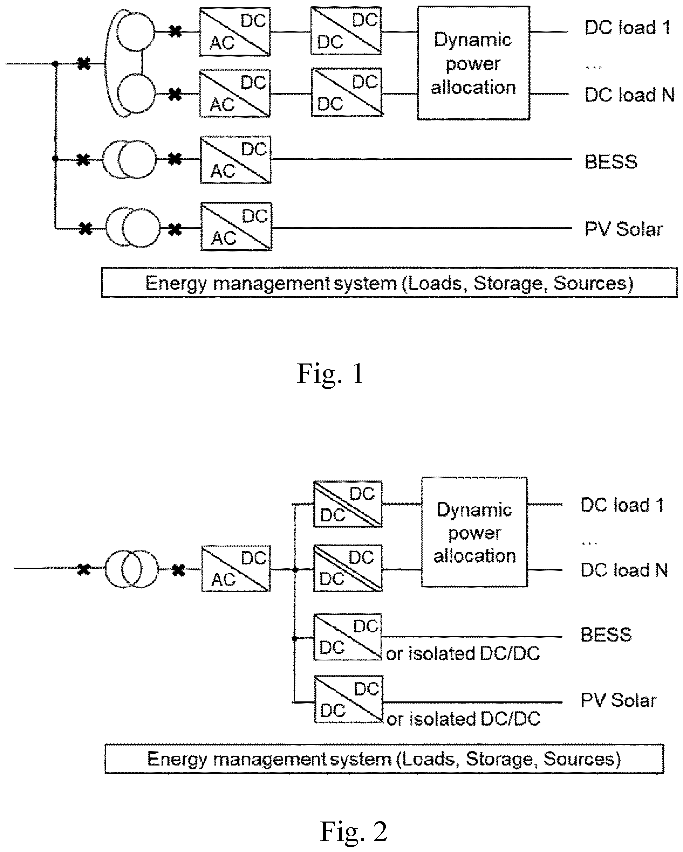

According to the state of the art, distribution grids are based on a high voltage (HV) or medium voltage (MV) grid connection using one or multiple low frequency transformers, i.e. 50 or 60 Hz. This allows different power distribution concepts at lower voltage. Fig. 1 shows an exemplary configuration according to the state of the art. It employs a common HV or MV AC bus, a transformer stage, parallel connected AC/DC converters and, depending on the connected load or source, an additional DC/DC converter. The grid may serve DC loads 1 to N via a dynamic power allocation, battery energy storage systems (BESS) and PV solar sources.

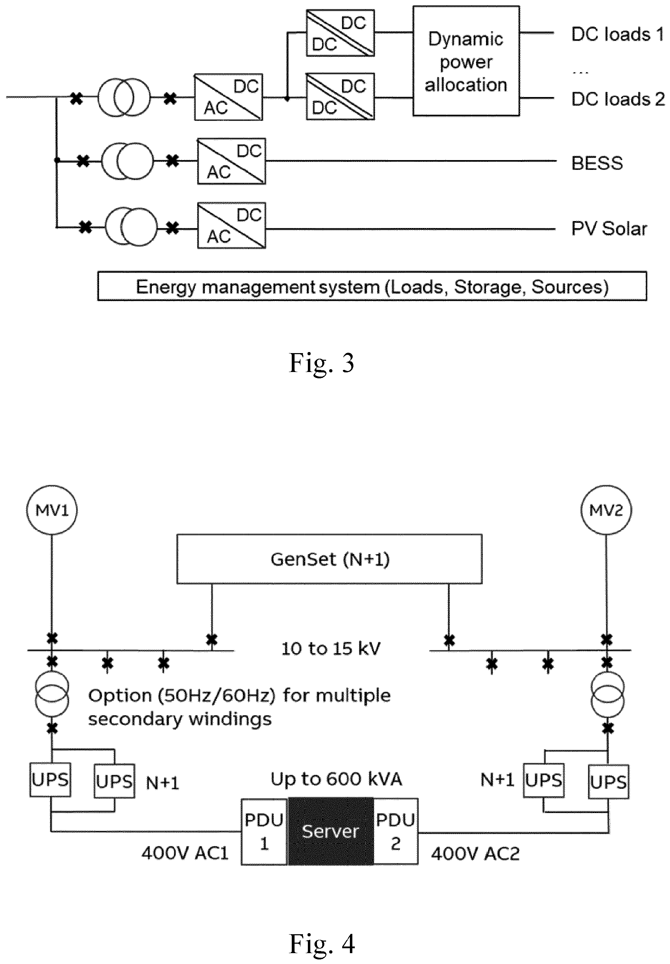

As shown in Fig. 2, a single AC/DC converter is connected upstream of parallel DC/DC converters, wherein the DC/DC converters share a common DC connection. The loads and sources may be similar to the example of Fig. 1. Using AC/DC for the charging of electric vehicles typically allows for unidirectional power flow but can also be of bi-directional type to support for example Vehicle to Grid operation. An example is given in Fig. 3, having parallel AC/DC converters and one branch with parallel DC/DC converters serving loads. The loads and sources may be similar to the ones of the previous figures. Additionally, in Fig. 4 a traditional AC power distribution of a large datacenter is shown. DC distribution solution are able to offer substantially higher efficiency and lower costs.

This disclosure proposes a power distribution and collection grid based on parallel connected converters. To achieve individual voltage control of the connected loads, energy storage elements and energy sources converters based on SiC MOSFETs are preferably used. Power distribution units for the individual loads allow efficient use of the infrastructure and increased availability. Overall energy management of the innovative power distribution and collection grid enable highest efficiency and control of the electrical energy costs.

The present disclosure is defined in the independent claims. Dependent claims describe preferred embodiments.

The present disclosure relates to a power grid comprising a converting stage comprising a plurality of DC/DC converters connected in parallel. At least one of the DC/DC converters is a single-stage isolated DC/DC converter comprising a voltage control configured to control a voltage of the respective DC/DC converter.

Various embodiments may preferably implement the following features.

The power grid may further comprise another converting stage comprising at least one converter, wherein the other converting stage may be connected upstream of the parallel connection of the DC/DC converters. Preferably, the parallel connection is a DC bus.

Preferably, at least one of the at least one converter of the other converting stage is a unidirectional AC/DC converter comprising a diode or thyristor rectifier, and/or a bidirectional AC/DC converter based on a 2-level or 3-level topology or a Modular Multi-Level Converter, MMC, topology.

Preferably, at least one of the DC/DC converters of the converting stage comprises at least two DC/AC converters connected in parallel and an AC/DC converter configured to provide a DC output, wherein the at least two DC/AC converters and the AC/DC converter are configured to be connected to a transformer unit for coupling the parallel DC/AC converters to the AC/DC converter.

Preferably, at least one of the DC/DC converters comprises a DC/AC converter comprising series switches configured to convert a DC input into AC and an AC/DC converter configured to provide a DC output. The DC/AC converter and the AC/DC converter are preferably configured to be connected to a transformer unit. Preferably, the transformer unit is configured to couple the DC/AC converter to the AC/DC converter.

Preferably, the power grid further comprises at least one DC current limiting and/or breaking unit.

Preferably, the at least one DC current limiting or breaking unit is positioned in at least one of the DC/DC converters of the converting stage, or is positioned upstream of the converting stage of the DC/DC converting stage.

The power grid preferably further comprises a power distribution unit configured to distribute the power to at least one consumer load. The power distribution unit preferably comprises at least one switch per DC/DC converter of the converting stage configured to connect or disconnect outputs of at least two DC/DC converters of the converting stage to the consumer load.

Preferably, the power distribution unit comprises a plurality of switches per converter configured to connect or disconnect outputs of the converting stage, wherein the number of switches corresponds to the number of loads.

Preferably, the power distribution unit further comprises a control unit configured to control the at least one switch to distribute power according to loads and/or sources connected to the power grid. Preferably, the control unit is configured to manage assignment of the output voltages of the plurality of converters of the converting stage according to loads and/or sources connected to the power grid.

Preferably, the power grid is connectable to at least one of variable speed heat pump systems, hyperscale data centers, distributed battery energy storage, physically distributed or collocated DC chargers, or renewable energy sources or any combination thereof.

The disclosure further relates to a method for controlling a power grid, preferably as described herein. The method comprises converting a DC input to a DC output using single-stage isolated DC/DC converters connected in parallel and comprising a voltage control configured to control a voltage of the respective DC/DC converter.

The disclosure further relates to a DC/AC converter for use in a power grid, preferably as described herein. The converter comprises a DC input connection, at least two capacitors, and a plurality of switches connected in series. The switches are configured to convert a DC input voltage into an AC output voltage.

The present disclosure is further described with reference to the attached drawings. Therein,

Figs. 1 to 4 show configurations according to the prior art,
Fig. 5 shows an example according to the present disclosure,
Fig. 6 shows a connection of series cells according to an example,
Fig. 7 shows a connection of series switches according to an example,
Fig. 8 shows a configuration according to an example of the present disclosure, and
Figs. 9 to 11 show examples of a power distribution unit according to the present disclosure, and
Figs. 12 and 13 show exemplary flow charts of a control unit.

In case not indicated otherwise, elements with the same reference signs or symbols denote the same or similar elements in the respective figures.

One key idea of the innovation is to build a flexible and highly efficient power distribution and collection grid, which can serve multiple applications like variable speed heat pump systems, hyperscale data centres, distributed battery energy storage and physically distributed or collocated EV chargers. Furthermore, an integration of renewable energy sources is also feasible according to the present disclosure.

In particular, the disclosure employs a plurality of isolated, and according to an embodiment single-stage, DC/DC converters which are connected in parallel. The parallel connection may e.g. be realised by connecting a plurality of isolated DC/DC converters to a DC bus. Thereby, a flexible power grid may be provided which is capable of handling different loads and sources without affecting stability of the grid.

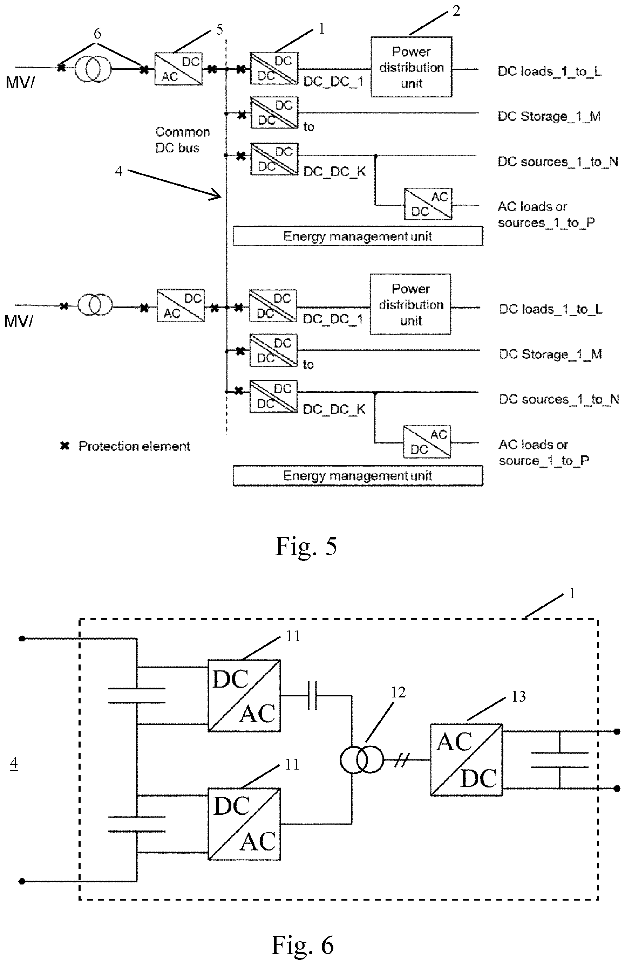

Fig. 5 shows the principle structure of a power grid according to an example of the present disclosure. A power grid, which may also be referred to as power distribution and collection or power redistribution grid, according to Fig. 5 comprises one or multiple medium or high voltage (MV/HV) grid connection points connected to one or more transformer(s) followed by one or more AC/DC power conversion unit(s). The output(s) of the at least one AC/DC converter is/are connected to a local or distributed DC distribution grid which may also be referred to as a (common) DC bus 4. Alternatively, HVDC or MVDC may directly be supplied to the parallel connecting element, e.g. the DC bus. Furthermore, other connections than a DC bus may be used.

The following description will be based on a DC bus but is not to be understood in a restrictive manner. Any connection suitable for connecting a plurality of DC/DC converters in parallel may be used with and fall under the scope of the present disclosure.

At the DC bus 4, multiple distributed single-stage isolated DC/DC 1 converters are connected. In particular, each of the isolated DC/DC converters 1 has an individual voltage control capability. Furthermore, each such isolated DC/DC converter 1 may have an individual DC current limiting and/or breaking functionality. Some of the isolated DC/DC converters 1 may serve DC loads (DC loads_1_to_L), optionally by means of a power distribution unit 2 which will be described below. Optionally, one or some of the isolated DC/DC converters 1 are serving one or more electrical energy storage systems (DC storage_1_M) and/or one or some of the isolated DC/DC converters 1 are serving DC sources (DC sources_1_to_N) or AC loads and sources (AC loads or sources_1_to_P).

To achieve physically distributed systems, the common DC bus voltage level can be varied according to the needed power transfer. It may be of the low voltage DC (LVDC) or medium voltage DC (MVDC) type. The structure of isolated single-stage DC/DC converters 1 connected in parallel to a DC bus 4 ensure a stable and flexible grid which allows the connection of various loads and sources without affecting grid stability.

Depending on the type of voltage input, i.e. AC or DC, no or at least one AC/DC conversion unit 5 may be provided. Moreover, the AC/DC power conversion may allow unidirectional or bidirectional flow. In particular, a unidirectional AC/DC power conversion unit 5 can be a parallel or series multi-pulse diode or thyristor rectifier. Alternatively, a bidirectional AC/DC power conversion unit 5 can be a switch based converter, i.e. NPC or a cell based converter, i.e. MMC. The AC/DC power conversion units 5 may optionally have a current limiting and/or breaking functionality, indicated by crosses in Fig. 5.

The isolated DC/DC converters 1 may be based on the series resonant converter or dual active bridge topology. In addition or alternatively to a current limiting or breaking functionality upstream of the DC bus 4, each DC/DC converter 1 may have an individual DC current limiting and/or breaking functionality.

The DC/DC converters 1 may be based at the common DC bus 4 side on series cells (e.g. half bridge or full bridge). According to an example, a series cell is connected to the DC bus 4 and comprises two DC/AC converters 11 connected in parallel as shown of Fig. 6. An AC/DC converter 13 provides a DC output to a load. The DC/AC converters 11 and the AC/DC converters 13 are configured to be connected to a transformer 12 for coupling the DC/AC converters 11 and the AC/DC converter 13. A capacitor between a DC/AC converter 11 and the transformer 12 may act as a DC block. On either side, a plurality of DC/AC or AC/DC converters 11, 13, respectively, may be provided. The structure of Fig. 6 may be provided in plurality and connected in parallel, e.g. via a DC bus 4.

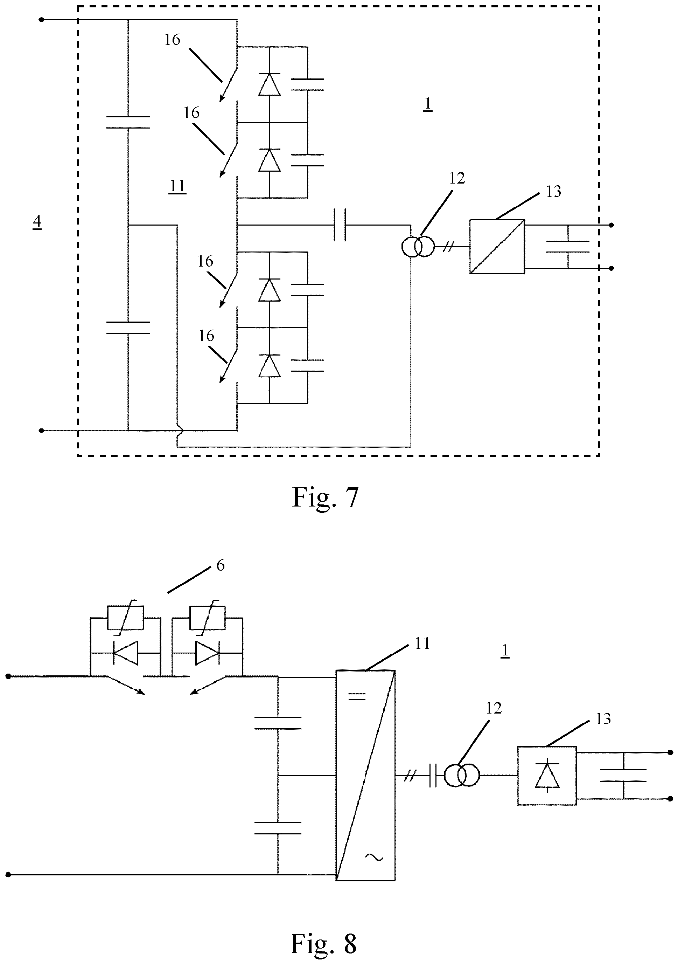

Fig. 7 shows a further example of a DC/DC converter 1 based on series switches 16. As shown above, the DC/DC converter 1 is connected to the DC bus 4 and comprises at least one DC/AC converter 11, which is based on said series switches 16, and at least one AC/DC converter 13, wherein the converters 11, 13 are configured to be connected to a transformer 12 for coupling the respective converters 11, 13. Each of the series switches 16 may be connected to a diode in parallel as shown in Fig. 7. Optionally, a capacitor may also be provided in parallel to each diode. A further capacitor between the DC/AC converter 11 output and the transformer 12 may act as a DC block.

In other words, the converter comprises a DC input connection, which may e.g. be connected to a DC bus 4, at least two capacitors, and a plurality of switches 16 connected in series. The switches 16 are configured to convert a DC input voltage into an AC output voltage and thus form a DC/AC converter 11.

According to an embodiment, the DC/DC converter 1 and in particular the at least one DC/AC converter 11 is based on a SiC MOSFET or Si IGBT technology and uses a medium frequency transformer to achieve galvanic isolation at the load, storage or source side.

An energy management system may be provided to control a cluster of load and sources connected by the DC/DC converter to the common DC bus and from there to the AC grid. The energy management system may further optimise the load flow to minimise the electrical energy bill of the AC grid connection. Said energy management system may be related to the power distribution unit to be described below.

Fig. 8 shows an example according to the present disclosure including a current limiting or DC breaker circuit. The breaker circuit may form part of a DC/DC converter 1 or may be located outside the DC/DC converter 1. Said exemplary breaker circuit 6 comprises at least one switch, a diode connected in parallel to each of the at least one switch and a variable resistor connected in parallel to each of the diodes. The DC breaker circuit 6 may disconnect at least one DC/DC converter 1 and/or a load and/or a source, depending on the positioning in the grid. The breaker circuit 6 may in particular disconnect at least one DC/DC converter 1 and/or a load and/or a source if overload is detected or the grid is becoming instable.

The DC breaker circuit 6 may be provided in the DC/DC converter 1 or upstream of the DC/DC converter 1. The DC breaker circuit 6 may be provided for at least one DC/DC converter 1 or may be provided in a plurality. In particular, the DC breaker circuit 6 may be positioned at or in a DC/DC converter(s) 1 and/or upstream of the DC/DC converter(s) 1 and/or upstream of the parallel connection of the DC/DC converters 1, e.g. the DC bus 4. The DC/DC converter 1 according to the example of Fig. 8 comprises a DC/AC converter 11, a transformer 12 and an AC/DC converter 13 to provide the functionality as described above. The circuit breaker of Fig. 8 may be applied to any of the embodiments described herein.

Each of the examples described with reference to Figs. 5 to 8 may be combined with a power distribution unit 2 configured to connect or disconnect DC outputs to loads.

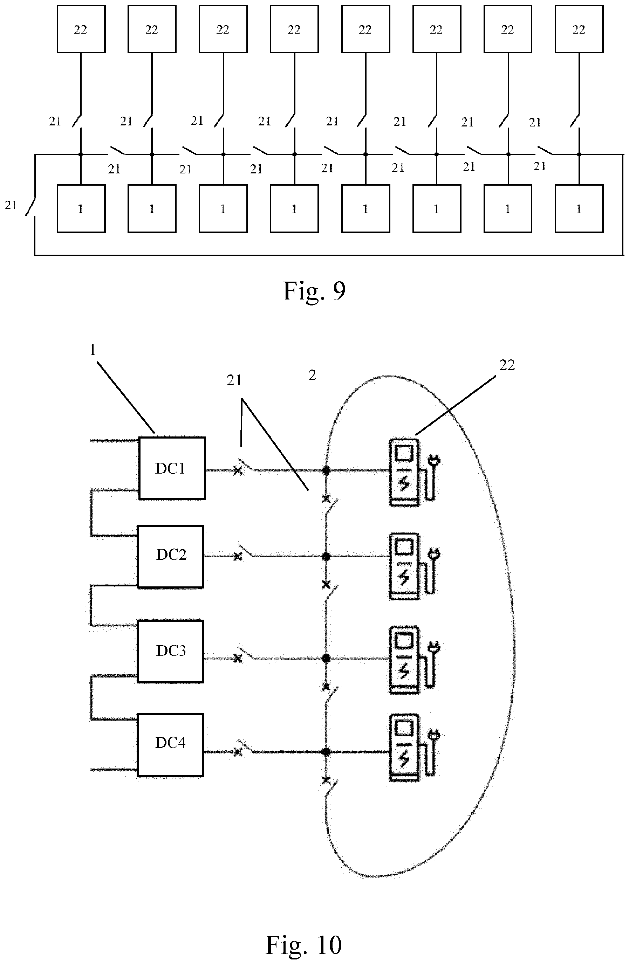

The power distribution unit is described with reference to an exemplary vehicle charging system using charging poles as loads 22 that can be connected to a vehicle to be charged. In case each charging pole 22 gets its own bus and each DC converter 1 can be connected to each of these busses, there would be nine switches (3 x 3) necessary for three poles and three outputs, and one hundred switches for ten outputs and ten poles. I.e., there is a quadratic growth for the number of switches related to the number of outputs. An alternative solution in order to save switches could be a ring structure, with each DC-output connectable by disconnectors or switches 21 to two neighboured outputs and with each charging pole 22 directly connectable via a disconnector 21 to one of the DC outputs. This is shown in Fig. 9, wherein the reference sign 1 denotes the DC/DC converters and the respective the DC outputs and the reference sign 22 denotes the loads or charging poles according to the example described above. This arrangement allows to use 2 x n switches 21 only, n being the number of outputs. A smart management of the sequence of connecting vehicles to free poles 22 may be employed in order to use the available power most efficiently. Target of this management would be to always provide a high probability to have at least one pole 22 available for fast charging with double power, which can be achieved by connecting adjacent DC outputs via the switches 21, and on the other hand load all DC outputs equally.

Fig. 10 shows a further exemplary configuration of a power distribution and collection grid including or being connected to a power distribution unit 2. In this example, the switches 21 also form a ring type configuration.

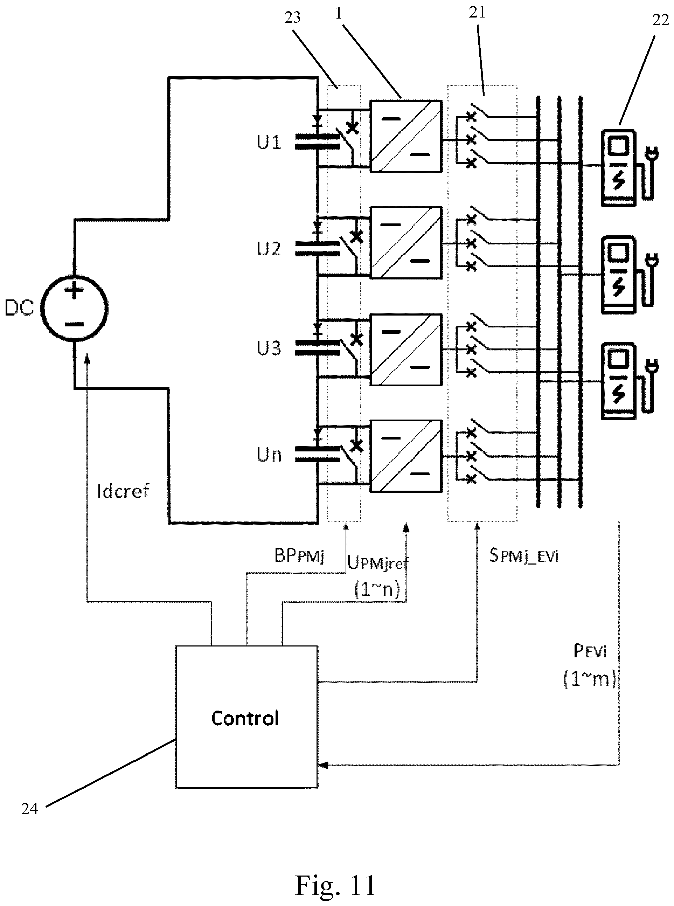

Fig. 11 depicts an alternative configuration which may be referred to as matrix configuration. In each respective output terminal of each DC/DC converter 1, there are N switches 21 connecting with N DC loads respectively. The total number of switches are N*n, wherein N is the number of loads 22, in this case charging poles, and n is the number of DC/DC converters 1. The matrix type switching group can be used in an application where there is no requirement to open a short circuit current. If the switches just need to open a current of normal operation, the switching current of matrix type is just (1/N) of the current according to the ring type.

In other words and referring to the examples described above, the system may be based on a SST topology, wherein the key components in the topology are several isolated DC/DC converters 1 and switching groups. The isolated DC/DC converters 1 are connected input terminals in series. The two outermost terminals of the in-series input terminals are connected to an MV DC bus. The output terminals of each isolated DC/DC converter 1 connect all the electric vehicle (EV) chargers via a switching group. The switching groups control their DC/DC converters 1 to join into one appointed EV charger. The MV DC bus is supported by a controllable DC source.

Optionally, the grid may further comprise a control unit 22 and/or a bypass breaker circuit 23. The control unit 24 may also be referred to as (coordination) controller. This controller 24 is proposed for smoothing operation of the proposed SST topology. The controller 24 generates the system operation references and switching orders, including current reference $I_{dcref}$ for the DC source, DC/DC converter 1 voltage references $U_{PMjref}$, and switching group control order $S_{PMj\_EVi}$.

Fig. 11 is thus a schematic view of a power grid and a distribution unit according to an exemplary embodiment showing the principle structure as well as optional features such as the control unit 24, the bypass breaker circuit 23 and the matrix type configuration of the switches 21.

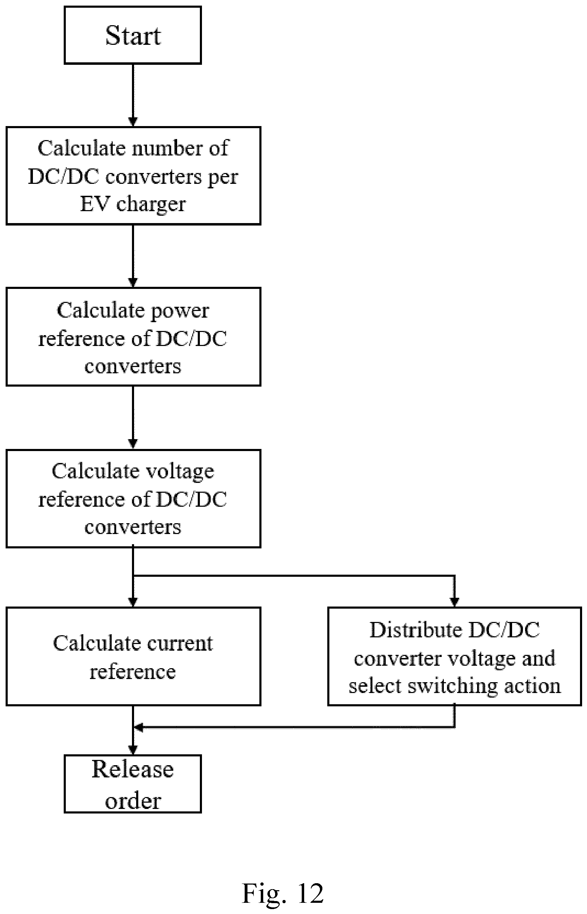

A flow chart is depicted in Fig. 12. In one control period, the controller 24 firstly calculates a suitable number of power modules (DC/DC converters 1) for each EV charger 22 according to a principle of nearest mean value of all the charger powers and smallest voltage difference. The principle can be explained as the number of power modules switching to the $i^{st}$ charger is calculated with round-off number of the divide result of the $i^{st}$ charger power requirement and mean power of all chargers. The calculation may be exemplarily performed using the following formula (F1).

$$N_{PM\_EVi} = round\left(\frac{P_{EVi}}{\frac{(P_{EV1}+P_{EV2}+\cdots+P_{EVi}+\cdots+P_{EVm})}{n}}\right) \quad (F1)$$

Consequently, the selected power modules and their voltage references can be calculated, e.g. utilising the formulae (F2) and (F3) shown below. In particular, (F2) is used to calculate the power reference $P_{PMj}$ of the power module j, i.e. the respective DC/DC converter 1. Using (F3), a voltage reference $U_{PMj}$ of the power module j, i.e. the respective DC/DC converter 1, is calculated, wherein N is the number of loads and $U_{PM\_nom}$ denotes the nominal voltage. In addition, a switching group action can be confirmed. The MVDC bus current reference can be also calculated. The calculation may exemplarily be performed with formula (F4) shown below.

$$P_{PMj} = \frac{P_{EVi}}{N_{PM\_EVi}} \quad (F2)$$

$$U_{PMj} = \frac{P_{PMj}}{\sum P_{PMj}} * N * U_{PM\_nom} \quad (F3)$$

$$I_{dcref} = \frac{\sum P_{PMj}}{\sum U_{PMj}} \quad (F4)$$

As mentioned above, the system may also comprise an optional bypass breaker circuit 23. The bypass breaker circuit 23 is exemplarily laid out in the input terminal of each isolated DC/DC converter 1 as shown in Fig. 11. The bypass breaker 23 of each isolated DC/DC converter 1 is used to make the converter be out of service temporarily to avoid too low input DC voltage to ensure operation with high efficiency. In some operation cases, the power difference of the isolated DC/DC converters 1 is very large. Thus, some converters operate in low input DC voltage and consequently have a low operational efficiency. In order to avoid this situation, some of the DC/DC converters 1 are stopped by closing theirs bypass breakers 23. The operating DC/DC converters 1 will get a more uniform power requirement and input DC voltage. However, the bypass breaker 23 is optional in the topology. The bypass breakers 23 may also be controlled by the coordination controller 24.

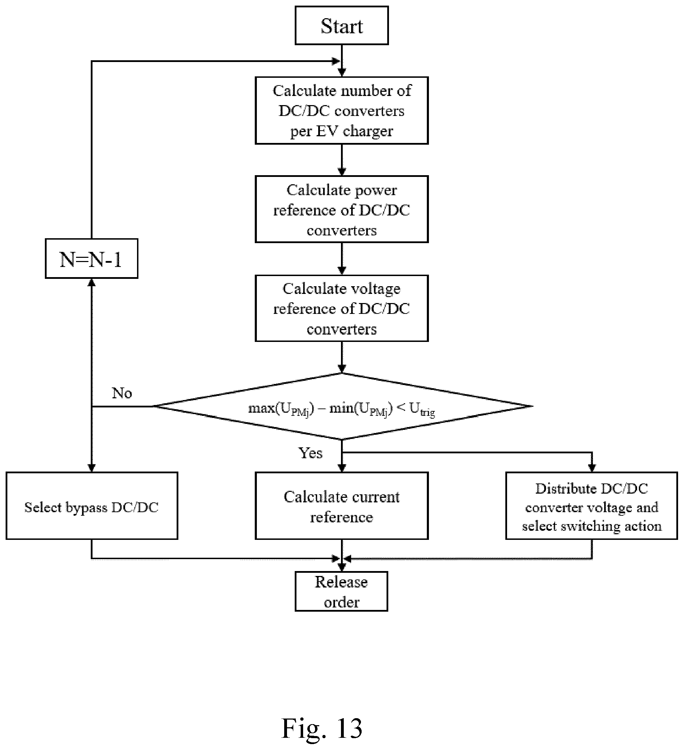

Fig. 13 shows a respective flow chart with bypass breaker 23 functionality. The respective formulae (F1) through (F4) are described above. As long as a difference of the maximum power module voltage and a minimum power module voltage $max(U_{PMj})$ - min $(U_{PMj})$ does not exceed a threshold voltage $U_{trig}$, a normal operation according to Fig. 12 is performed. However, if $U_{trig}$ is exceeded, the bypass breaker circuit 23 is activated to bypass a respective power module, i.e. DC/DC converter, and the number of loads N is reduced.

Furthermore, the controller 24, or station control, may be provided for handling assignment of loads such as charging poles 22 (in case of a DC charger for electric vehicles). Taking an example with four poles (cf. Fig. 10, poles 22), the station control 24 tries to keep two neighboured DC feeds (DC/DC converters 1) free. I.e., after pole 1 was connected to DC1 output, the next vehicle would either be connected to pole 2 or 4 (e.g. via signal lights with a red light above pole 3 indicating that pole 3 is occupied or not to be connected, and green lights above poles 2 and 4 indicating they are available). If done like that, after connecting the second vehicle, two neighboured DC feeds would be available for fast charging. There is no need for no-load at one DC output. In a situation when not all chargers are use, the tie switch can be connected to a neighboured DC output and the load can be shared. In the four pole system as above, when charging pole 1 and 2 are in operation, the tie switches from DC1 to DC4 could be closed and the tie switch between DC2 and DC3. By this, all DC outputs are loaded. Even if running in a situation that poles 1 and 3 are active and a new vehicle comes in - which then could only be charged with the power of one DC output - you could share the load of the higher loaded pole of 1 or 3 with the free remaining DC output by closing the related tie switch.

The power distribution unit may also be combined with other power distribution grids and other loads or sources as presented in the examples above.

According to the present disclosure, an improved power redistribution grid is provided capable of handling a plurality of inputs and outputs with an optimum efficiency.

The present disclosure also encompasses a corresponding method.

The present disclosure thus provides a flexible and highly efficient power grid based on parallel connected converters. According to an embodiment, the parallel connected converters are single-stage isolated DC/DC converters. To achieve individual voltage control of the connected loads, energy storage elements and energy sources converters based on SiC MOSFETs are used according to an embodiment. Power distribution units for the individual loads allow efficient use of the infrastructure and increased availability. Overall energy management of the innovative power distribution and collection grid enable highest efficiency and control of the electrical energy costs. The grid can thus be maintained in a stable state irrespective of the connected sources and loads, and particularly asymmetrical loads.

Other aspects, features, and advantages will be apparent from the summary above, as well as from the description that follows, including the figures and the claims.

While the disclosure has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present disclosure covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

**Claims**

1. Power grid, comprising
   a converting stage comprising a plurality of DC/DC converters (1) connected in parallel,
   wherein at least one of the DC/DC converters (1) is a single-stage isolated DC/DC converter (1) comprising a voltage control configured to control a voltage of the respective DC/DC converter (1).

2. Power grid according to claim 1, further comprising another converting stage comprising at least one converter (5), wherein the other converting stage is connected upstream of the parallel connection of the DC/DC converters (1), wherein preferably the parallel connection is a DC bus (4).

3. Power grid according to claim 2,

wherein at least one of the at least one converter (5) of the other converting stage is a unidirectional AC/DC converter (5) comprising a diode or thyristor rectifier,
and/or
is a bidirectional AC/DC converter (5) based on a 2-level or 3-level topology or a Modular Multi-Level Converter, MMC, topology.

4. Power grid according to any one of the preceding claims, wherein at least one of the DC/DC converters (1) of the converting stage comprises at least two DC/AC converters (11) connected in parallel and an AC/DC converter (13) configured to provide a DC output, wherein the at least two DC/AC converters (11) and the AC/DC converter (13) are configured to be connected to a transformer unit (12) for coupling the parallel DC/AC converters (11) to the AC/DC converter (13).

5. Power grid according to any one of the preceding claims, wherein at least one of the DC/DC converters (1) comprises a DC/AC converter (11) comprising series switches (16) configured to convert a DC input into AC,
an AC/DC converter (13) configured to provide a DC output,
wherein the DC/AC converter (11) and the AC/DC converter (13) are configured to be connected to a transformer unit (12), and
wherein the transformer unit (12) is configured to couple the DC/AC converter (11) to the AC/DC converter (13).

6. Power grid according to any one of the preceding claims, wherein the power grid further comprises at least one DC current limiting and/or breaking unit (6).

7. Power grid according to claim 6, wherein the at least one DC current limiting or breaking unit (6) is positioned in at least one of the DC/DC converters (1) of the converting stage, or
is positioned upstream of the converting stage of the DC/DC converting stage (1).

8. Power grid according to any one of the preceding claims, further comprising a power distribution unit (2) configured to distribute the power to at least one consumer load,
wherein the power distribution unit (2) preferably comprises at least one switch (21) per DC/DC converter (1) of the converting stage configured to connect or disconnect outputs of at least two DC/DC converters (1) of the converting stage to the consumer load.

9. Power grid according to claim 8, wherein the power distribution unit comprises a plurality of switches per converter configured to connect or disconnect outputs of the converting stage, wherein the number of switches corresponds to the number of loads.

10. Power grid according to any one of claims 8 or 9, wherein the power distribution unit further comprises a control unit configured to control the at least one switch (21) to distribute power according to loads and/or sources connected to the power grid,
wherein preferably the control unit is configured to manage assignment of the output voltages of the plurality of converters of the converting stage according to loads and/or sources connected to the power grid.

11. Power grid according to any one of the preceding claims, wherein the power grid is connectable to at least one of variable speed heatpump systems, hyperscale datacenters, distributed battery energy storage, physically distributed or collocated DC chargers, or renewable energy sources or any combination thereof.

12. Method for controlling a power grid, preferably according to any one of the preceding claims, the method comprising:
converting a DC input to a DC output using single-stage isolated DC/DC converters (1) connected in parallel and comprising a voltage control configured to control a voltage of the respective DC/DC converter (1).

13. DC/AC converter for use in a power grid, preferably according to one of claims 1 to 11, the converter comprising a DC input connection, at least two capacitors, and a plurality of switches connected in series, wherein the switches are configured to convert a DC input voltage into an AC output voltage.

Fig. 1

Fig. 2

Fig. 3

Fig. 4

Fig. 5

Fig. 6

Fig. 7

Fig. 8

Fig. 9

Fig. 10

Fig. 11

```
┌─────────────┐
│    Start    │
└─────────────┘
       │
       ▼
┌─────────────────────┐
│  Calculate number of │
│  DC/DC converters per │
│     EV charger       │
└─────────────────────┘
       │
       ▼
┌─────────────────────┐
│   Calculate power    │
│  reference of DC/DC  │
│     converters       │
└─────────────────────┘
       │
       ▼
┌─────────────────────┐
│  Calculate voltage   │
│  reference of DC/DC  │
│     converters       │
└─────────────────────┘
       │
       ├──────────────────────────────┐
       ▼                              ▼
┌─────────────────────┐   ┌─────────────────────────┐
│  Calculate current  │   │   Distribute DC/DC      │
│     reference        │   │  converter voltage and  │
└─────────────────────┘   │  select switching action │
       │                  └─────────────────────────┘
       ▼                              │
┌─────────────┐  ◄───────────────────┘
│  Release     │
│  order       │
└─────────────┘
```

Fig. 12

Fig. 13

Europäisches
Patentamt

European
Patent Office

Office européen
des brevets

# EUROPEAN SEARCH REPORT

Application Number

EP 20 20 3160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 126 658 A (GLOBAL ENERGY INTERCONNECTION RES INST CO LTD ET AL.) 16 August 2019 (2019-08-16) * paragraphs [0134] - [0138]; figures 1-12 * | 1-13 | INV. H02J1/10 H02M3/335 |
| X | GB 2 536 653 A (CARROLL & MEYNELL TRANSF LTD [GB]) 28 September 2016 (2016-09-28) * pages 12,13; figures 6,8 * | 1-3,5, 8-13 | |
| X | EP 3 660 997 A1 (SUNGROW SHANGHAI CO LTD [CN]) 3 June 2020 (2020-06-03) * paragraphs [0025] - [0030]; figures 5-8 * | 1-5,7-13 | |
| X | US 2015/188350 A1 (DEBOY GERALD [AT]) 2 July 2015 (2015-07-02) * figures 19-23 * | 1,12 | |

TECHNICAL FIELDS
SEARCHED      (IPC)

H02J
H02M

The present search report has been drawn up for all claims

| Place of search | Date of completion of the search | Examiner |
|---|---|---|
| Munich | 19 April 2021 | Grosse, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.....................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 20 3160

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2021

| Patent document cited in search report | | Publication date | Patent family member(s) | | Publication date |
|---|---|---|---|---|---|
| CN 110126658 | A | 16-08-2019 | NONE | | |
| GB 2536653 | A | 28-09-2016 | NONE | | |
| EP 3660997 | A1 | 03-06-2020 | CN 109301813 A | | 01-02-2019 |
| | | | EP 3660997 A1 | | 03-06-2020 |
| | | | US 2020177091 A1 | | 04-06-2020 |
| US 2015188350 | A1 | 02-07-2015 | CN 104753125 A | | 01-07-2015 |
| | | | DE 102014119687 A1 | | 02-07-2015 |
| | | | KR 20150079450 A | | 08-07-2015 |
| | | | US 2015188350 A1 | | 02-07-2015 |

EPO FORM P0459

For more details about this annex : see Official Journal of the European Patent Office, No. 12/82